# EUROPEAN PATENT APPLICATION

(11) **EP 3 838 851 A1**
(43) Date of publication of application: **23.06.2021**
(21) Application number: 20214401.0
(22) Date of filing: 16.12.2020
(51) Int. Cl.: C02F 11/121, B01D 24/00, B01D 29/25, B30B 9/04, B30B 9/26, C02F 11/122, C02F 11/128

(54) **APPARATUS AND METHOD FOR DEWATERING AND COMPACTING SLUDGE, WASTES, PASTY MATERIALS AND LIQUID SUSPENSIONS**

(30) Priority: 16.12.2019 BR 102019026860
(71) Applicant: Silva, José Oswaldo da, 20081-000 Rio de Janeiro, RJ (BR)
(72) Inventor: SOARES, Sergio Murilo Stamile, 20081-000 Rio de Janeiro, RJ (BR); VAZ, Claudio Mariano, 20081-000 Rio de Janeiro, RJ (BR); SILVA, José Oswaldo da, 20081-000 Rio de Janeiro, RJ (BR)
(74) Representative: López Camba, Emilia

(57) **Abstract**

The present invention relates to an apparatus and method for dewatering and compacting sludge, wastes, pasty materials and liquid suspensions through a batchwise mechanical process of filtration wherein the compression is performed by a piston, the apparatus comprising: means (1) for feeding the material, a feed inlet duct (2), a filtration chamber (3), a filtration surface (4), a compression plate (5) driven by a compression device (6), a knife gate or feed inlet valve (7) for opening and closing the inlet of the filtration chamber (3) with or without the displacement of the compression plate (5), a closing plate (8) driven by the closing device (9), tray por the collection of the filtrated liquid (13), wherein the entire operation is automated and the filtration pressure applied during the cycle can be varied according to the method of operation present in the present invention.

## Description

The present invention refers to a mechanical apparatus and method for dewatering and compacting sludge, wastes, pasty materials and liquid suspensions through a batchwise mechanical process of filtration and compacting, with technology developed from the association of three concepts: i) modern concept of conditioning and filtration of sludge and similar materials; ii) basic concept of mechanical compaction of compacting presses fitted with pistons, which are equipment usually used for the compaction of solids by means of a piston; and iii) groundbreaking fundamental concepts from the present invention that are of utmost importance and need, which include, among others, the control and programming of the steps and optimum conditions of the process, with the control of the pressure applied on the material throughout the process of filtration.

Through the combination of these three concepts in the present invention, a surprising and unprecedented result was achieved - a mechanical equipment with an extremely simple and compact design that demands low investment and maintenance costs as compared to other technologies available in the market, which is capable of dewatering and compacting materials with high humidity levels and with small-sized particles and solids, providing high solids concentration in the final cake, and which also provides a high quality filtered stream with minimum contents of solids, thus being in perfect agreement with the main requirements of the current market for this type of equipment.

### Technical Field:

The present invention refers to the field of Mechanics, more specifically in the area of filtration. The apparatus of the present invention can be used, for example, but not limited to, the dewatering and compaction of sludge, wastes, pasty materials and suspensions, especially those originated from the primary, secondary and tertiary stages of wastewater treatment plants, such as those from floating devices, decanters, aerobic and anaerobic biodigesters, among others.

### Summary of the Invention

With the development of new technologies in the field of treatment of effluents and with the growing requirements of environmental control laws, as well as due to greater people awareness, the demand for equipment for the dewatering and compaction of sludge, wastes and pasty materials rose rapidly, with special focus on the reduction of costs and the hazards incurred during the handling, transportation or a possible post-processing of these residual materials. The existing market for sludge dewatering and compaction in effluents treatment plants have some main requisites, as listed below, which are not fully met by the currently existing techniques:
Highly concentrated final cake - high concentration of solids (reduced humidity);
Good quality filtered stream - low concentration/loss of solids in the filtered stream;
Continuous or automated batch operation for operating regimes of up to 24 hours/day;
Low investment and maintenance costs, compatible with the low aggregated value of the processed product;
Robust and simple conception, appropriated for heavy-duty operation, with low wearing of parts, especially with respect to abrasion;
High productivity and small size - compact system with low floor space demand for its installation, and yet capable of handling large amounts of the materials being processed;
Flexible technological design for scale-up and scale-down - meeting a large range of capacities without a significant impact on investment costs;
Operational flexibility - appropriate for handling products that have variations in their composition and/or physical characteristics, such as changes in composition, concentration and particle size.

To comply with these requirements, it is of capital importance that the processed sludge gets very well compacted, with the smallest possible volume and weight, and its key that it does not exhibit liquid leakage during handling, thus minimizing the risks of environmental contamination. The compaction of the material is obtained by the removal of the liquid phase, retaining the solids - the higher the concentration of solids, the lowest is the humidity and, therefore, the dryer is the material at the end of the process, and the lower are its transportation, general handling and possible post-processing costs, such as for drying. For example, a 100-kg sample of sludge with 98% humidity, when dewatered to a concentration of 40% solids, exhibits a final cake weight of 5 kg, which represents a 20-fold reduction as compared to its initial weight.

It is worth mentioning that the effort that is needed to dewater a sludge does not depend only on the final compaction level that is desired for the cake, but also on the type of sludge that is being processed. While some types of sludge are very consistent above 25% solids, others require much higher concentrations of solids, on the order of 50% or more, to become sufficiently consistent and dehydrated for appropriate handling. On the other hand, a cleaner extracted liquid stream, with a smaller concentration of solids, reduces the need for re-processing and minimizes possible environmental problems that may arise from its handling and disposal, as well as facilitates the reuse of this stream.

As it will be shown below, the majority of the current technologies available in the market for dewatering and compacting sludges do not exhibit satisfactory results in terms of final compaction, mainly due to limitations caused by their respective mechanical designs, such as reduced maximum filtration pressure, high rotational speeds that cause severe wear by abrasion, and others. On the other hand, as also described below, the present invention makes it possible for the application of high filtration pressures without the occurrence of a significant wear by abrasion, which is an important condition for guaranteeing an appropriate compaction of the material.

### Background of the Invention

The mechanical dewatering of sludges containing high humidity and solids of small sizes has never been an easy task due to the low porosity and permeability that these sludges usually have, especially when this permeability is drastically reduced as the solids are compacted. It is known in the art that some of these sludges, such as the sludge from the bio-digestion of effluents, when pressed, form a compacted and compressible layer next to the filtering surface, which has very low porosity and tends to drastically reduce the filtration rate. To avoid this problem, alternatives were created, such as the addition of filtration aids to the material that is being processed, in order to coagulate and flocculate the small solid particles into larger clumps, or to provide more rigidity to the material, making it incompressible, thus preserving the porosity of the material, even when it is compressed and concentrated. However, the addition of filtration aids, even though it may reduce some of the problems with the filtration of these types of materials, increases operating costs, as well as increases the amount of final cake that is produced, due to the addition of the filtration aids themselves; therefore, this procedure should be minimized and, if possible, even avoided, and this is one of the main objectives of the present invention.

In general, the separation of the solid and liquid phases of sludges is accomplished through: (a) a process of sedimentation or flotation of the solids based on the difference in density between the phases; (b) filtration processes, forcing the material through a perforated or porous filtration surface that retains the solids, usually with the opening of the filtration surface smaller than the granulometry of the solids that are being retained; (c) or by the combination of both processes. Based on these general principles, several technologies have been developed, each one triggering the development of many other technological variants, aiming to meet the demands of the new market for the dewatering and compaction of sludges, as described previously. In general terms, the best known and used technologies for this purpose are: filtration in a rotary vacuum filter, belt press, filter press, centrifugation and, more recently, screw presses; these are briefly presented bellow exclusively for purposes of reference regarding the present invention. For purposes of comparison with the present invention, only mechanical dewatering technologies are addressed herein, electric dewatering technologies not being addressed. As it will be seen, all of these technologies are very distinct from the present invention and they all exhibit equally different results.

US patents US 3,919,088; US 8,137,568; and US 6,267,889 refer to rotary vacuum filters that operate according to the principle of filtration - continuous system wherein a perforated rotary cylindrical drum, which may or may not be covered with a filtrating belt, fitted with vacuum internally produced in the drum, generates a positive pressure difference from the outside to the inside of the drum, which sucks the material through the filtering medium. In this case, the maximum theoretical pressure that can be used for filtration is 1 (one) atmosphere (absolute vacuum), which is relatively low to assure efficient dewatering of most sludges. To minimize the problems of this limitation in pressure, the speed of rotation of the drum must be very slow to provide a longer time for the percolation of the liquid phase, at the same time that the thickness of the cake must be thin, in order to reduce the path of percolation of the liquid phase; these translate into low productivity - large-sized, low-productivity equipment. Finally, to perfectly seal the filtration surface exposed to the vacuum, it can only work with diluted, non-pasty sludges, given the practical difficulty in homogeneously distributing a pasty material over the filtration surface. In many cases, this forces the dilution of the sludge prior to its processing, which is a procedure that goes in the opposite direction of the purpose of dewatering.

US patents US 5,207,907; US 4,276,168; US 4,420,402; US 4,459,907; and US 3,601,039 refer to belt presses that operates according to the principle of filtration, consisting in a continuous system wherein a moving filtration belt receives a very liquid and homogeneous sludge and conducts it along the equipment, initially passing through a vacuum chamber, with the belt following to a section for the discharge of the cake or, in some models of this type of filter, passing first through a complementary section for compression of the solids between rollers that complete the dewatering prior to the discharge of the cake. This filter is increasingly replacing the Rotary Filter with several advantages. However, except for some geometric and mechanical differences, the first step of vacuum filtration shares the same principle and the same limitations as the Rotary Filter. In those filters that are complemented with a step of compression between rollers, the dewatering is more effective, even though new problems arise related to the control and adjustment of the belt, as well as a relevant additional wear of the belt and rollers due to abrasion. It requires large amounts of water for the constant washing of the filtration belt, increasing the volumes of liquid effluents to be reprocessed and diluting whatever components may be present in the liquid phase that are to be recovered. They are sophisticated equipment with many moving parts, which require several operational adjustments and demand high capital and maintenance costs, especially for the frequent replacement of the filtration belt. Like the Rotary Filter, the speed of the filtration belt must be low, to allow for the percolation of a major part of the liquid phase during the vacuum stage, and it can only work with liquid non-pasty sludges, in order to guarantee the necessary sealing for the vacuum.

US patents US 5,051,194; US 3,347,383; US 5,855,778; US 4,364,827; and US 6,387,282 refer to belt presses that operates according to the principle of filtration, which operates discontinuously in batch cycles. Of all existent models, the most used ones consist in a series of vertical plates supported by beams and mounted so as to make up several independent dewatering chambers, with the filtration plates covered with a cloth or similar material of low granulometry, through which the liquid phase of the sludge is filtered and drained, while the solid material remains inside the chambers, on the internal surface of the filtration plates. These equipment operate in a discontinuous way, in cycles wherein the sludge in liquid form is fed by pumps to the filtration chambers. In this process, the pumping system itself provides the filtration pressure. With the gradual accumulation of solid material retained on top of the filtration surface, the rate of filtration drops to a minimum acceptable level, when the sludge feeding pump is turned off. At the end of this stage, each filtration chamber is opened to allow for the removal of the cake, which usually falls onto a conveyor for later disposal. The cake removal operation from the filter chambers is complex and demands the execution of several mechanical operations, with a huge loss of time and efforts, especially of labor. In spite of this immense inconvenience, these filters are still used very frequently due to some advantages that they have, such as robustness and, mainly, the ability to operate under high pressures (in some extreme cases up to 16 bar), thus producing a compacted cake usually 10 to 20% dryer than the cake obtained in Rotary Vacuum Filters. However, the advantage of being able to use high pressures in this equipment has the inconvenient that the high pressure is provided by the liquid sludge feeding system itself. Because of that, even at the end of the filtration step the pumping system has to continually pump sludge, with large amounts of water into the chamber, not existing any means of dewatering the final cake without being that of feeding more water into the chamber. To overcome this incoherent fact and to guarantee a well dewatered cake, it is necessary to employ large amounts filtration aids, besides having to operate the final step of filtration with very reduced filtration rates, thus increasing cycle time, with a consequent loss of productivity. Moreover, due to the large number of operations that are required in each filtration cycle, the automation of this type of filter is possible, but is overly complex and expensive.

US patents US 4,202,773; US 4,729,830; US 4,335,846; US 2003/0228966; and US 6,432,299 refer to centrifuges and/or decanters that operates according to the principle of sedimentation of solids amplified by the application of centrifugal acceleration generated by the rotation of the material under high speeds. There are several models of centrifuges available in the market. For dewatering sludges, the most widely used are the decanter-type centrifuges, wherein the solids, generally denser than the liquid, are forced against the internal surface of a rotary drum, while an internal screw conveyor, centralized with respect to the drum, rotates and continuously scrapes the settled material towards a discharge port. Due to the high speed of rotation, the liquid, being less dense than the solids, is directed towards a central liquid collector. The separation of the phases is efficient and, when well operated and adjusted, this type of equipment produces a very compacted cake. However, its major limitations are: high capital cost due to the mechanical complexity of the equipment; high maintenance costs due to the wear caused by the abrasion of the material at high rotational speeds; operational difficulties, as it requires a fine adjustment of the operating conditions and the conditioning of the material that is being processed (addition of large amounts of filtration aids of the flocculant type) to increase the size of the solid particles, so as to assure the efficiency of the separation; as well as low operational flexibility when the sludge that is being fed continuously varies in its composition and concentration.

US 8,596,195; US 5,390,592; US 3,98,434; EP 0,958,023 B1; ES 2420580T3; US 5,357,855; and US 4,844,799 refer to screw presses that operates according to the principle of filtration. The dewatering occurs in a drum that, in general, is in an inclined position, which has a wired metal filtration screen that forms the walls of the cylinder and an internal screw conveyor. The sludge, already conditioned with additive flocculants, is conducted towards the entrance of the press. In the first section of the drum, free water drainage takes place. Gradually, the sludge suspension increases in solids content as the material enters the pressure zone of the press. Due to the back pressure created by a restriction at the outlet port of the solids, more free water is released from the sludge cake as it progresses towards the outlet port. To avoid the clogging of the filtration screen, this is periodically washed with water under pressure. Despite that, the screen often gets clogged, causing instability in the final humidity of the cake, with water leaking with the discharged cake. The pressure applied on the material is determined by the level of constriction of a valve at the outlet of the cake; the more closed it is, the higher is the pressure in the compaction zone and, therefore, higher is the abrasion of the sludge against the filtration screen and the screw conveyor. This limits the maximum filtration pressure that can be applied, and hence the humidity of the cake gets affected - very humid final cake with low solids concentration. To reduce this problem, a prior addition of large amounts of flocculants is necessary. Due to abrasion problems and to the design of the equipment, it is not appropriate to add mineral structural additives to the sludge (the so called "structuring filtering aids", such as diatomaceous earths). In addition, the screw press demands high capital and maintenance costs.

Compaction presses fitted with a piston or press plates have been used for a long time for the mechanical compaction of several solid materials, in general dry materials of large granulometry, with the purpose of reducing their volumes, through the compaction of the void spaces inside the material. These equipment operate discontinuously, in batch mode, wherein, by means of some source of force multiplier, a high pressure is exerted on the material that is being compacted, generally through a rigid plate that presses the material against a surface, sometimes a filtration surface, but in most cases of solids compaction, a blind surface, wherein this capability of applying high pressures is a fundamental characteristic for obtaining well-compacted materials (an example of this type of compression press is the press used in the compaction of scrap metals). However, the Compaction Presses, as per their original mechanical design, are not appropriate for dewatering sludges and liquid or pasty wastes containing solids with small granulometry, especially in what regards issues such as water sealing and the automation of the process, which is carried out in batch mode. In the literature addressing the current state of the art, there are few references or patent documents related to Compaction Presses that have been designed for dewatering diluted liquid materials containing small-sized solids. In the few documents that have been found, many difficulties can be noticed, as well as unsolved design, process and operating issues, as hereinbelow discussed:

US 4,347,137 discloses an equipment for the mechanical compaction of mineral solutions or pastes comprised of a cylindrical compaction chamber with lateral openings for feeding the material that is to be dewatered, which is then compacted by means of one or two pistons that move axially in opposite directions inside the chamber, being the liquid filtrated through a perforated rubbery, or similar, elastic membrane, which is supported in a sandwich-like arrangement of screens to the working faces of the pistons. The equipment was developed to compact mineral materials, such as coal and copper powders, into pellets, with the application of huge pressures, of the order of 900 to 4000 psi (61 to 272 bar). The document does not show how the gaps between the pistons and the compaction chamber are sealed, nor it provides a practical alternative for the removal of the compressed material from the chamber, as well as it does not present a practical solution for an automated feed of the sludge into the chamber. Also, the document calls for a perforated rubbery elastic plate as the filtration medium, which, when pressed, reduces the size of the orifices to a very small granulometry (micrometers), and which would promptly be blocked if operated with sludges containing very fine solids, fibers and/or of the biological type - it is worth mentioning that, in the document, the author himself made the comment that the equipment was proper for the compaction of minerals, and not for the dewatering of sludges containing fibers. Therefore, this equipment does not solve the inefficiencies of the current state of the art for the dewatering and compaction of sludges from effluents treatment plants that process organic, fibrous and other compressible sludges, which is one of the main objectives of the present invention.

US 4,214,519 discloses an equipment for the mechanical compaction of fruits, comprised of a compaction chamber with squared section, with a superior opening for feeding the material which is then compacted by two pistons that move axially in opposite directions against each other inside the chamber, the liquid being filtrated through gaps in the sides of the chamber. The document does not show how the sealing of the gaps between the pistons and the compaction chamber is made, neither it provides a practical alternative for the automation of the feed and discharge operations. To avoid the clogging of the filtration gaps, the author proposes the installation of a mechanical device that opens the gaps after each fruit compaction operation, which makes it inappropriate for the filtration of finer solids. As such, said equipment does not solve the inefficiencies observed in the current art for dewatering and compacting the sludges from effluents treatment plants that process organic, fibrous and other compressible sludges, which is one of the main objectives of the present invention.

US 5,961,827 teaches an equipment for sludge compaction comprised of an initial dewatering chamber by filtration through walls that are shaped like filtrating bellows, which are compressed by a piston. After being pre-dewatered, a valve opens in the lower part of this chamber and the material follows to a second chamber, for compaction by means of a mechanical piston which compresses the dewatered material from the first chamber. The document does not show how the sealing of the several inherent gaps of the compression piston system is made, nor it mentions how to solve possible clogging problems of the bellows-type filtration surface of the first chamber. The document also does not describe how the dewatered material passes from one chamber to the next, and presents a complex mechanical designed that is difficult to automate, with several sequential operations, which is a diversion from of one the main objectives of the present invention, which is that of operational simplicity and maintenance with low investment cost.

Other patents, such as US 3,540,586, US 5,961,827, WO/2008/011796 and WO 1991/008035, also refer to equipment for the compaction of sludges using pistons, but just like the objects of the previously cited patents, all these equipment fail to comply with one or more of the objectives of the present invention, which is an equipment of simple and compact mechanical conception, with low capital and maintenance costs, capable of dewatering and compacting materials with high humidity and solids with small granulometry, with high efficiency of solids concentration in the compacted final cake, at the same time ensuring a good quality filtrated liquid stream with a minimum of solids being carried out.

As mentioned earlier, there is very little or almost none technical literature or patents targeted at the dewatering and the mechanical compaction of suspensions and sludges containing fine solids, and as shown in the previous documents, the equipment proposed in the art exhibit several difficulties and unsolved design, process and operational issues that make it difficult to comply with the current requirements of the market. Among the main observed inefficiencies in these documents, the following are listed: 1) difficulty in maintaining a good filtration rate when the screen (with small aperture size) gets clogged or when there is a sudden reduction in the permeability of the material, a commonly occurring fact during the compression of compressible and small granulometry sludges; 2) difficulty for cleaning the filtration surface when it gets impregnated, especially when a filtration surface with small aperture is used; 3) difficulties in the sealing of the gaps between the compression chamber and the compression piston, which considerably limits the maximum pressure that can be used in the process, which in turn precludes the use of these equipment with very diluted sludges containing small-sized solids; 4) lack of definition on how to perform and control the feeding of the material to the compression chamber in a practical and economically feasible way, especially in cases of very liquid and/or pasty sludges; 5) lack of a practical and economically feasible procedure for the discharge of the cake from the compression chamber after the compaction; 6) complexity in the automation of the various operations that are required during each cycle; 7) it is difficult to conceive a feasible embodiment which is at the same time simple and compact, that guarantees operation and maintenance that are equally simple, associated to a low capital investment. As discussed below, the present invention provides simple and innovative solutions for solving and overcoming all these issues, thus creating an equipment that is perfectly viable for the dewatering of sludges that have low concentration, are pasty or that contain solids with small granulometry.

As also mentioned previously, the market for the dewatering of wastes in general and for the sludges from effluents treatment plants requires, among other things, that the processed material be compacted enough to avoid the leakage of any liquids in its post-handling. In the vast majority cases, this is only possible in processes of mechanical filtration when pressures higher then 1 (one) bar are employed, something that does not occur in equipment that operate under vacuum, as the Rotary Filters and most Belt Filters, among others.

It is important to emphasize that in the market of equipment for sludge dewatering in effluents treatment plants, in most cases, the final product of the process, which is the compacted cake, has very little or no aggregated value, therefore being a material that is to be disposed, what still demands an additional cost for such. Accordingly, more sophisticated and costly dewatering technologies, originally developed for the processing of noble materials, are seldomly economically feasible for the effluent's treatment market, such as the case of centrifuges in general and other more sophisticated equipment.

### Summary of the Invention:

The present invention relates to an equipment and its respective operating method for the dewatering and compaction of sludges, wastes, pasty materials and suspensions, through a mechanical process of filtration and mechanical compaction, in batch cycles, which was developed based on the mechanical state of the art available in the literature and in the industrial practice for the dewatering and compaction of sludges, wastes, pasty materials and suspensions, observing the respective advantages and disadvantages associated to each existing process and equipment, as well as the current requirements and demands of the market for this type of application, aimed, especially, for the market of dewatering and compaction of residual sludges from effluents treatment plants, as per the summary that was previously presented. Its development was based on the association of three main concepts: modern concept of sludge conditioning and filtration; basic mechanical concept of compaction of equipment such as Compaction Presses with Piston; and innovative concepts from the present invention developed by the authors, necessary and fundamental to comply with the new requirements of the market.

During the development of the present invention, the respective authors carried out extensive practical tests of filtration in equipment of the kind of Compaction Presses with Piston, wherein were raised the problems and inherent limitations of this type of equipment for the dewatering and compaction of sludges that are liquid, pasty and/or contain solids with small granulometry, such as: excessive sludge leakage through the gaps between the compression piston and the filtration chamber; and, mainly, the drastic reduction in the filtration rate before reaching the desired solids concentration for the compacted cake.

Along various subsequent experimental tests, unexpected and unprecedented results were found for the solution of the problems that had been initially found, preserving the original objective of developing an equipment with an extremely simple mechanical conception, that is compact and robust, with low investment and maintenance costs when compared to other existing technologies in the market, with an excellent capacity of dewatering and compaction of materials even with high humidity and small granulometry solids, being in perfect agreement with the main requirements of the current market.

### Brief Description of the Drawings

In the Figures:
Figure 1 shows an schematic view of the apparatus of the present invention;
Figures 1A, 1B, 1C, 1D and 1E show the several stages of a complete operating cycle of the present invention as shown in Figure 1;
Figure 2 shows another embodiment of the present invention with the filtration chamber installed with its longitudinal axis in the vertical position;
Figure 3A shows another embodiment of the present invention with the closing device of the filtration chamber consisting in a sliding knife gate, in the closed position;
Figure 3B shows the closing device of the knife gate type in the open position;
Figure 4A shows another embodiment of the present invention with the closing device of the filtration chamber consisting in a rotary plate in the closed position;
Figure 4B shows the closing device of the rotary plate type in the open position;
Figure 5: shows the filtration surfaces installed on the faces of the compression plate and the closing plate, showing the filtrate collectors behind the respective plates;
Figure 6 shows the filtration surfaces installed inside the filtration chamber, with the compression plate moving between these internal filtration surfaces, showing the filtrate collector behind the closing plate;
Figure 7 shows the equipment according to another preferred embodiment of the present invention, wherein the feeding of the equipment is made by means of pumping the material under pressure, comprising: sump tank, feed pump, feed inlet duct, filtration chamber, filtration surface, compression plate, compaction driving device, feed knife gate, closing plate, closing driving device, filtrate collector and filtrate outlet;
Figure 7A shows the sludge feed by means of pumping the material under pressure, with the filtrate returning to the sump tank;
Figure 7B shows the: sludge feed by means of pumping the material under pressure, with the filtrate following ahead in the process;
Figure 7C shows the beginning of sludge compaction;
Figure 7D shows the end of sludge compaction;
Figure 7E shows the discharge of the compacted cake;
Figure 8 shows the another preferred embodiment of present invention, wherein the filtration chamber positioned with its longitudinal axis in the vertical position, and with the feed of material to the equipment made by means of pumping the material under pressure, comprising: sump tank, feed pump, feed inlet duct, filtration chamber, filtration surface, compression plate, compaction driving device, closing plate, closing driving device, filtrate collector and filtrate outlet.

### Description of the Preferred Embodiments

The apparatus according to the present invention comprises: a cylindrical tubular filtration chamber (3) where the material to be dewatered is processed, comprising an end for feeding the material to be processed and another end for the discharge of the processed material; a filtration surface (4) arranged along the entire useful area of the filtration chamber; a feeding hopper (1) for stocking and feeding the material to be processed, coupled to the filtration chamber through a feed inlet duct (2), through which the material is fed to the filtration chamber next to the feed end of the filtration chamber; a compression plate (5), driven by a driving device (6), for the mechanical compaction of the material, the compression plate having a cross-sectional size slightly smaller than the internal dimensions of the filtration chamber, wherein the compression plate is installed internally and centrally to the filtration chamber, with its longitudinal axis coinciding with the longitudinal axis of the filtration chamber, wherein the compression plate may move along its longitudinal axis from the feed end of the compression chamber - maximum backward position, to the discharge end of the filtration chamber - maximum forward position; a device for closing the discharge end of the filtration chamber comprised by a closing plate (8) and a driving device for this closing plate (9), which in its closed position provides water tightness to the filtration chamber during the stages of filtration and mechanical compaction, and which, when in the open position, allows for the discharge of the processed material by means of the forward displacement of the compression plate; a device for opening and closing the feed to the filtration chamber, of the knife gate type, comprised by a smooth plate (7) with a cross section that is similar in shape to the surface of the filtration chamber, so as to provide a perfect adjustment between the two surfaces, and by this guaranteeing the perfect sealing of the feed inlet duct, being this smooth plate attached to the upper rear part of the compression plate, so that it moves together with the backward and forward displacements of the compression plate, allowing for the opening and closing of the passage of the feed inlet duct; and a filtrate collector (13) installed externally to the filtration chamber for collecting the liquid that is filtered in the filtration surface, wherein this collector has an outlet (14) for the discharge of all the liquid filtered in the process.

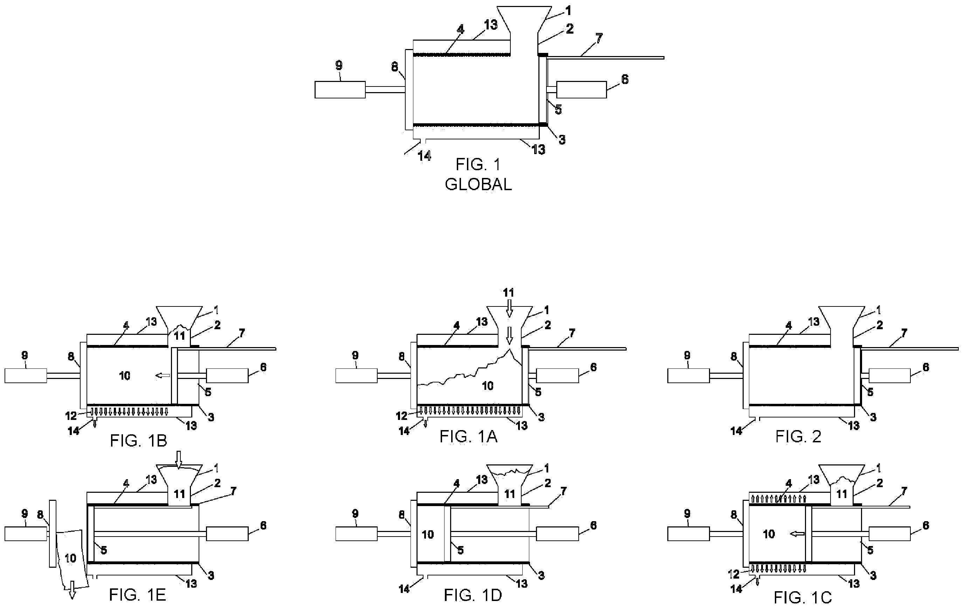

Figure 1A shows the Feeding Stage, with the material (10) that was stored in the hopper (1) feeding, by gravity, the filtration chamber (3), while the compression plate (5) is maintained in its full backward position and the closing plate (8) is maintained fully advanced, closing the exit of the filtration chamber. During the entire duration of this step there is an initial dewatering of the material (10), wherein the liquid (12) is filtered by gravity flow on the lower surface of the filtration surface (4).

In Figure 1B, after the filtration chamber (3) is totally filled with the material, the advancement of the compression plate (5) starts, which subsequently begins the accommodation of the material (10) inside the filtration chamber (3), while the knife gate (7) closes the feed inlet duct (2) to the filtration chamber. During this stage, the dewatering of the material (10) by gravity flow keeps occurring.

In Figure 1C, the step of Mechanical Compaction of the material (10) begins, with the advancement of the compression plate (5) and the complete closing of the passage of the feed inlet duct (2) to the filtration chamber (3) by the knife gate (7). During this stage, the filtration is carried out under pressure along the entire area of the filtration surface (4), while the material (11) to be processed in the next compaction cycle accumulates in the hopper (1).

In Figure 1D, the step of Mechanical Compaction ends, and the advancement of the compression plate (5) is interrupted. Subsequently, the retreat of the closing plate (8) takes place. In Figure 1E, the closing plate (8) is totally retreated, in its full backward position, allowing the discharge of the compacted material (10), which is ejected from the filtration chamber (3) by means of the advancement of the compression plate (5), which pushes the cake (10) out of the filtration chamber (3). Once the cake is discharged, the closing plate (8) advances, closing the exit of the filtration chamber, and the compression plate (5) moves backwards to completely retreat the knife gate (7), opening the passage that feeds the filtration chamber (3), thus restarting the cycle, as shown in Figure 1A. Depending on the characteristics of the material (11) fed to the press, for optimal filtration, it may be desirable to conduct a prior conditioning of the material, by means of the addition of chemical filtration aids (flocculants, coagulants and the like) and/or structural filtration aids (minerals, such as diatomaceous earth and the like, or organics, such as vegetable fibers or wood sawdust and the like), which can be conducted using the usual techniques available in the current art.

According to what will be described hereinbelow, for obtaining all benefits and advantages of the present invention, in general, the filtration pressure must be varied along the cycle of operation. For such, in the preferred embodiment of the equipment, as shown in Figure 1 and described previously, the forward and backward displacements of the compression plate, as well as the acting force and the associated pressure exerted by the compression plate on the material being processed, must be properly controlled throughout the operation and programmed according to a pre-defined "compression pressure x application time" curve, according to the characteristics of each material to be processed.

In the option of the compression plate being driven by a hydraulic piston, such control can be automated and programmed, for example, through the installation of electric control valves for the control of the flow and pressure in the circuit of the hydraulic oil, with the operation being controlled by programmed electronic timers according to a pre-defined "pressure x time" curve, according to the characteristics of each material to be processed. In the option of the compression plate being driven by an electric piston, such control can be automated and programmed, for example, by means of electrical-electronic devices for the control of the torque and the variation of the speed of displacement of the compression plate.

As mentioned previously, the present invention comprises many innovations that were incorporated io the original concept of the Compaction Press with Piston, which, combined, gave origin to a new equipment for the filtration of sludges, wastes, pasty materials, and suspensions, with many advantages as compared to the previously available techniques. Hereinbelow are presented the main innovations comprised in the present invention, with a summarized description of its advantages, always using the alternative of embodiment presented in Figures 1, 1A, 1B, 1C, 1D and 1 E as reference, but taking into consideration that other embodiments are also possible:
(a) Automatic Feed and Compatibility with the Availability of Material to Be Processed: the feeding of the material (11) to be processed in filtration chamber (3) can be carried out automatically with the forward and backward displacements of the compression plate (5) driven by the driving device (6), through the knife gate (7) that is attached to the compression plate (Figures 1A, 1B and 1C); this embodiment makes it unnecessary to incorporate any other moving components for the controlling the feeding stage, besides the assembly comprised by the compression plate and the knife gate attached to it, such as valves and others, as such being a simple and low-cost solution that can very easily be automated and programmed. As an additional advantage of the present invention, optionally, the equipment can be designed and programmed to interrupt its operation during the feeding stage, waiting until the complete filling of the filtration chamber (3) with the material to be processed, for only then resuming the operating cycle. This can be done through the installation of a level sensor/controller in the feed inlet duct (2), which, when the filtration chamber is full and the level of sludge reaches the sensor, automatically resumes the operation of the equipment. In such way, the operation is automatically adjusted to meet the demand of flow, even if this flow is not continuous, as in most cases, with frequent interruptions or reductions in the flow of the material to be processed. This significantly reduces the mechanical wear of the equipment and the consumption of energy, as the equipment only operates when there is enough material to completely fill the filtration chamber (3). It is worth mentioning that while the equipment remains in stand-by during the feeding stage, an important initial dewatering of the material (10) is taking place by gravity flow in the compression chamber. These advantages of the present invention can hardly be extended to equipment such as a Rotary Filter, Belt Filter, Centrifuge or Screw Press, due to their continuous mode of operation.

As described hereinabove, the present invention is characterized, among other things, by the following facts:
The beginning and end of the materials feeding step into the filtration chamber (3) are carried out through the opening and closing of the knife gate (7) attached and fixed to the compression plate (5), without the need for any other moving components;
During the materials feeding step into the filtration chamber (3), there is already an initial dewatering of the material by gravity flow;
During the materials feeding step into the filtration chamber (3), the compaction assembly comprised by the compression plate and the knife gate (7) remains stopped and can be programmed to only start its movement for the compression and filtration of the material when the filtration chamber (3) is completely filled with the material to processed, thus allowing for the equipment to operate according to the demand.

(b) Automatic Discharge of the Compacted Cake and Cleaning of the Filtration Surface: as shown in Figure 1E, the ejection of the compacted cake (10) from the filtration chamber (3) is carried out directly by the advancement of the compression plate (5), after the opening of the exit end of the filtration chamber by the retreat of the closing plate (8). In such way, it is not necessary to incorporate any other moving components to eject the cake, besides the compaction assembly itself, making it an operation that is simple and of easy automation and programming. As an additional advantage of this operating mode and design for the discharge of the compacted cake, is the fact that, during its ejection, the cake is dragged along and touches the internal surface of the filtration surface (4) of the filtration chamber (3), with a movement that is perpendicular to the axis of the filtration orifices in the filtration surface (4), creating a remarkable and positive effect of mechanical cleaning of these orifices. The mechanical wear or abrasion caused by this operation is little due to the low displacement speed of the compression plate, which is an inherent design characteristic of the equipment object of the present invention. Besides that, the equipment allows for the easy addition of a washing system for the filtration surface (4), through the installation of water sprays that can be placed externally to the filtration surface (4) and that can be activated after the ejection of the cake and prior to the restart of the feed of the material (11) to the filtration chamber (3), when it is empty of material; complementarily, or instead of that, such water sprays can be placed inside the filtration chamber (3), positioned next to the inner perimeter of the filtration chamber (3), attached to the backward face of (behind) the compression plate (5), moving together with the compression plate while it moves along the filtration chamber (3), cleaning the filtration surface from the inside to the outside, without this cleaning water coming into any contact with the material that is being processed, which could damage its dewatering.

As described hereinabove, the present invention is characterized, among other things, by the fact that the ejection of the compacted cake from the filtration chamber (3) is carried out by the advancement of the compression plate (5), promoting the mechanical cleaning of the filtration surface (4), which can also be cleaned by means of water sprays.

(c) Pressure and Filtration Time Varied and Controlled Throughout the Process of Filtration: through extensive research and the performance of filtration experiments, it was found that upon varying the filtration pressure applied on the material to be dewatered, as well as by controlling the time during which this pressure is applied along the process, it is possible to overcome several limitations and problems found with other filtration technologies when employed for the dewatering of liquid sludges and sludges containing solids with small granulometry.

More specifically, it was observed that at the beginning of the process of filtration, through a careful control of the pressure and filtration time, it is possible to create a thick natural filtrating pre-coat layer of the material, composed by the material itself that is being dewatered, over the areas through which the dewatered liquid leaves the filtration chamber (3) - that is, next to the filtration surface (4) and over the existing clearance (or gap) between the compression plate (5) and the internal surface of the aforementioned filtration surface (4). As this natural filtrating pre-coat layer exhibits a porosity of very small granulometry, similar in size to the solids in the material that is being dewatered, it is capable of retaining the finest particles in the sludge, thus avoiding the leakage of solid materials during the beginning of the pressurization (sludge leakage), even while the material is still substantially liquid or diluted. Surprisingly, it was also noticed that the aforementioned pre-coat arises promptly, even when the used filtration surface (4) has openings (orifice sizes) that are several times larger than the granulometry of the solids in the material that is being dewatered, as long as the initial filtration pressure being applied on the material during the formation of said pre-coat is low enough and is increased only slowly and gradually.

By beginning the filtration with a lower pressure, the natural filtrating pre-coat starts forming, at first, in a very tenuous way; as this pre-coat is reinforced, the pressure can be gradually increased, observing that it does not exceed the maximum limiting pressure above which the pre-coat can be broken. After a certain point, the natural filtrating pre-coat that is formed acquires enough resistance to support the maximum desired pressure. From this moment onwards, the maximum pressure may be kept fixed, while the cake proceeds its drying.

It is important to highlight that, with the formation of the natural filtrating pre-coat, the liquid is actually filtered through said pre-coat, thus preserving the filtration surface (4), which possesses larger openings, from possible clogs; at the same time, the filtrate tends to be clearer, as a consequence of the small dimensions of the filtration channels that are present in the pre-coat.

Even though this effect is similar to that found in the art with the employment of pre-coats made from structural filtration aids and with the use of filtration surfaces containing small openings (fabrics and the like, such as used in press filters), here, the effect occurs even without the addition of any filtration aid and with the employment of filtration surfaces that have substantially larger openings, which is only possible when a varied and controlled filtration pressure is applied, as proposed in the present invention, so as to avoid the breakage of said pre-coat. As an explanation for this phenomenon, it can be assumed that the natural filtrating pre-coat is formed by the spontaneous creation of arch-shaped support bridges, such as the ones used in the construction of the ancient stone bridges of the Roman empire, wherein large openings or gaps were overcome by means of the successive support of various smaller pieces of stone.

Only for purposes of illustration of the procedure of formation of the natural filtrating pre-coat proposed in the present invention, which shall not be construed as a limitation, below is a summarized description of a method of operation according to the alternative of embodiment presented in Figure 1:
After the closing of the filtration chamber (3) by the knife gate (7) (Figure 1B), advancement of the compression plate (5) under a very low driving pressure, just enough to initiate the formation of the natural filtrating pre-coat over the filtration surface (4) and along the entire periphery of the compression plate (5), sealing the gaps and clearances between the compression plate (5) and the filtration surface (4), checking that there is no breakage of the pre-coat with subsequent leakage of sludge alongside the flow of filtrate;
Continued advance of the compression plate (5) (Figure 1C) while the pressure is gradually increased along the time needed for the formation of a thick natural filtrating pre-coat that is resistant enough to withstand, without breaking, the larger pressures that will be subsequently applied.

Maintenance of the advancement of the compression plate (5) with a final and fast increase in pressure until the maximum desired pressure is reached, wherein the time duration of this step is defined by the characteristics of the material that is being processed. At this point, if there is a drastic reduction in the filtration rate before the desired cake compaction is reached, this will be an indication that the permeability of the compacted material has reduced significantly, which happens when the sludge contains compressible solids. If this happens, it may be necessary to include in the process a new step for the recovery of part of the filtration rate, as will be described below.

As additional advantages of employing filtration surfaces with wider openings and narrower mechanical gaps and clearances, it can be cited less risk of clogging and easier cleaning of the filtration surface (4), with lower capital and maintenance costs of its components (filtration surface and sealing systems), as well as an overall increase in filtration rate.

As described above, the present invention is characterized, among other things, by the fact that, during the initial process of filtration, wherein the material is still very liquid (diluted), it is possible to form a resistant natural filtrating pre-coat on top of the filtration surface (4) and over the mechanical gaps and clearances in the filtration chamber (3), this pre-coat being comprised by the same solid materials contained in the material that is being filtered, even in cases wherein the size of the openings in the filtration surface and of the gaps are much larger than the size of solids in the material that is being filtered, this natural filtrating pre-coat being an extremely efficient way for obtaining a good quality filtrated stream with low amounts of solids in it.

It is important to mention that, due to its mechanical conception, while the procedure hereinabove mentioned is simple and easy to be automated and programmed in the equipment object of the present invention, this procedure is unfeasible in equipment that operate in continuous mode, such as a Rotary Vacuum Filter, Belt Press, Centrifuge and Screw Press.

(d) Recovery of the Filtration Rate: as previously mentioned, when more complex sludges are processed, with solids of small granulometry and with undesirable characteristics of compressibility, it is common to occur a progressive accommodation of the smaller solids in the liquid drainage channels inside the cake, thus blocking the passage and quickly reducing the porosity and permeability, with a subsequent reduction in the filtration rate. Through extensive filtration experiments, it was observed that, in a surprising way, in cases like that, when the filtration rate drops drastically, it was possible to recover it, at least in part, by means of a very simple procedure of quick decompression of the cake, followed by a subsequent return of the compression, thus giving continuity to the filtration process.

As a possible explanation for this astonishing phenomenon that was observed in the experiments, it is possible to suppose that, with the sudden decompression of the cake and due to its characteristics of compressibility, the cake expands itself rapidly and freely inside the compaction chamber (3), thus creating innumerous internal cracks that break the equilibrium and the previously existing arrangement of the solid particles; with the return of the procedure of cake compression, there is a new structural rearrangement, creating new passage channels for the liquid and providing a partial recovery of the lost filtration rate. Complementarily, at the time of decompression, the cake acts as a sponge, sucking external air through the filtration surface (4) in a direction opposite to the filtration of the liquid (from the outside to the inside), thus forcing a detachment and the breaking of the solids layer next to the filtration surface (4) (the natural filtrating pre-coat) which, due to its excessive compaction, was the main cause for the reduction in the filtration rate. It is important to point out that this operation is made when the cake is already with a good consistency of solids, especially alongside the filtration surface, and then the desired effect is much more significant than if the cake were still liquid. Also, as at this moment the cake is well dried alongside the filtration surface (4), it is not necessary to form a new natural filtrating pre-coat, and the filtration may be resumed immediately and at the maximum pressure, with no risks of sludge leaking.

Only for purposes of illustration of the procedure proposed in the present invention for the recovery the filtration rate, below is a summarized description of a method of operation according to the alternative of embodiment presented in Figure 1:
When the filtration rate drops drastically, interruption of the advancement of the compression plate (5);
Short retreat (backward movement) of the compression plate (5) with the objective of decompressing and expanding the compacted cake, maintaining a void gap large enough to allow for the detachment of the pre-coat from the filtration surface (4) and the creation of void spaces (new passage channels) inside the cake;
Resume the advancement of the compression plate (5), continuing the filtration process.

It is important to mention that, due to its mechanical conception, while the procedure hereinabove mentioned is extremely simple and easy to be entirely automated and programmed in the equipment object of the present invention, this procedure is unfeasible in equipment that operate in continuous mode, such as a Rotary Vacuum Filter, Belt Press, Centrifuge and Screw Press, or in discontinuous equipment such as the Filter Press (Plate Filter), which employs the pumping of the liquid sludge to exert the filtration pressure, not offering practical possibilities for decompressing the cake during the process in a dry environment that it is not the moment wherein the cake is to be discharged.

As described above, the present invention is characterized, among other things, by the fact that part of the filtration rate lost with the reduction of permeability of the material that is been processed, which naturally occurs during the process of filtration, can be recovered through a quick procedure of decompression of the compacted material with its subsequent recompression.

(e) Displacement of the Interstitial Liquid by the Injection of Air: even when high pressures are employed for the compression of sludges, at the end of the process, the interstitial spaces that exist between the solid particles remain filled with liquid, which may still correspond to a significant amount of residual humidity. Through extensive experiments, it was noticed that, in a surprising way, the injection of air under pressure inside the filtration chamber (3) during the process causes the displacement and the filtration of this interstitial liquid through the filtration surface (4), with the air replacing the interstitial liquid and leading to an additional significant reduction in the final humidity of the cake, enormously easing the work of mechanical compaction. This occurs because the air, upon passing through the material, expels and directs the interstitial liquid through the preferential channels formed in the material, towards the filtration surface, where it is filtered. The excellent final dewatering result is due to the perfect complementarity that occurs between the job of expelling the interstitial liquid by the injection of air under pressure and the job of mechanical compaction, which is an exclusive feature of the present invention. The injection of air can be carried before the beginning of the step of mechanical compaction, during this stage, or after its completion, depending on the type of material that is being dewatered. For more liquid materials, that is, less concentrated ones, the injection of air before the mechanical compaction removes the superficial liquid fraction that segregates from the solid fraction during the feeding stage, and also eliminates a large fraction of the interstitial liquid, drastically reducing both the effort and the operating time of the mechanical compression stage.

Only for purposes of illustration of the procedure proposed in the present invention for the displacement of the interstitial liquid by air, below is a summarized description of a method of operation according to the alternative of embodiment presented in Figure 1:
After the feeding of the material (10), before, during, and/or after the completion of the step of final compaction of the material (10), air is injected inside the filtration chamber (3) to displace and force the filtration of the interstitial liquid that exists between the particles through the filtration surface (4). The air can be injected through orifices in the compression plate (5) and/or in the closing plate (8), and/or through parts of the filtration surfaces themselves. The choice of the best option depends on the type of material that is being processed and on the preferred embodiment of the present invention that has been chosen.

When the rate of filtration is considerably reduced during the injection of air, air injection is interrupted, and the operating cycle is resumed;
It is important to mention that, due to its mechanical conception, while the procedure hereinabove mentioned is simple and easy to be automated and programmed in an economical way in the equipment object of the present invention, this procedure is much more complex to carried out in equipment that operate in continuous mode, such as a Centrifuge or Screw Press.

As described above, the present invention is characterized, among other things, by the fact that the residual humidity of the cake due to the interstitial liquid that is present at the end of the process of filtration and compaction can be reduced by means of a procedure of injection of air into the compacted material, that can be carried out before, during and/or after the step of mechanical compaction of the material.

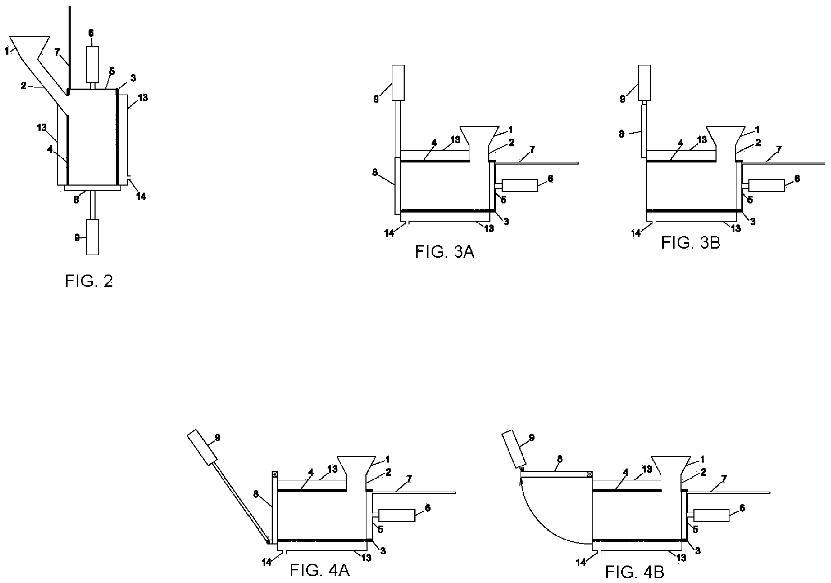

In the preferred embodiment of the present invention that was described previously, and which was presented in Figure 1, the filtration chamber (3) is positioned with its longitudinal axis in the horizontal position, however in another preferred embodiment of the present invention, as shown in Figure 2, the filtration chamber (3) is positioned with its longitudinal axis in the vertical position, keeping the principles, essential characteristics and operating methods described previously.

In another preferred embodiment of the present invention, as shown in Figures 3A and 3B, the closing device of the filtration chamber (3) is of the knife gate type, wherein the closing plate (8) is installed externally and, in the closing position, is centralized with respect to the filtration chamber, with its longitudinal axis coinciding with the longitudinal axis of the filtration chamber (Figure 3A), wherein the closing plate can move perpendicularly to the axis of the filtration chamber, completely closing the discharge end of the filtration chamber in the position of maximum advancement and completely opening the discharge end of the filtration chamber in the position of maximum retreat (Figure 3B), so as to allow for the discharge of the processed material. This closing system of the filtration chamber can also be used with the option of the filtration chamber positioned with its longitudinal axis in the vertical position, keeping the principles, essential characteristics and operating methods described previously.

In yet another preferred embodiment of the present invention, as shown in Figures 4A and 4B, the closing device of the filtration chamber (3) is of the rotary type, wherein the closing plate (8) is installed externally and, in the closing position, is centralized with respect to the filtration chamber, with its longitudinal axis coinciding with the longitudinal axis of the filtration chamber (Figure 4A), wherein the closing plate can rotate around an axis that is perpendicular to the chamber and parallel to the face of the closing plate, so as to displace from the face of the discharge end of the filtration chamber - closed position, to an inclination that allows for the discharge of the processed material - open position (Figure 4B). This closing system of the filtration chamber can also be used with the option of the filtration chamber positioned with its longitudinal axis in the vertical position, keeping the principles, essential characteristics and operating methods described previously.

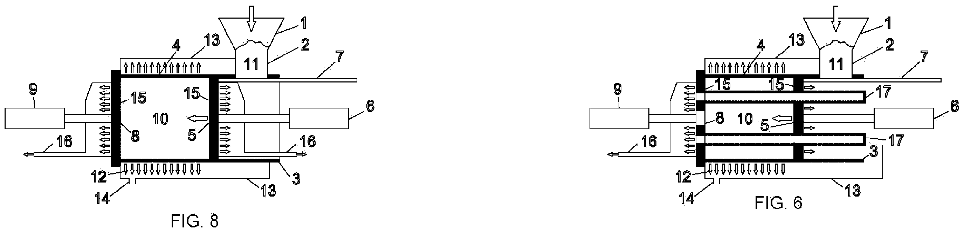

In another preferred embodiment of the present invention, as shown in Figure 5, the filtration is accomplished also or only through filtration surfaces located at the ends (15), installed on the faces of the compression (5) and closing (8) plates, wherein the filtered stream is collected in collectors (16) that are attached to the respective compression and closing plates. The installation of the filtration surfaces in the ends (15) can be made in complementation to the filtration surface (4) installed along the filtration chamber (3), to increase the total area available for filtration, keeping the principles, essential characteristics and operating methods described previously.

In another preferred embodiment of the present invention, as shown in Figure 6, the filtration is accomplished also or only through internal filtration surfaces (17), installed inside the filtration chamber (3), wherein the face of the compression plate (5) has openings, fitted with seals with the internal filtration surfaces (17), that allow for the compression plate to pass through these internal filtration surfaces. The liquid that is filtered through the internal filtration surfaces (17) flows through orifices in the closing plate (8), being collected in the collector (16) that is attached to the closing plate. The installation of the internal filtration surfaces (17) can be made in complementation to the filtration surface (4) installed along the filtration chamber (3) and/or the filtration surfaces in the ends (15), to increase the total area available for filtration, keeping the principles, essential characteristics and operating methods described previously.

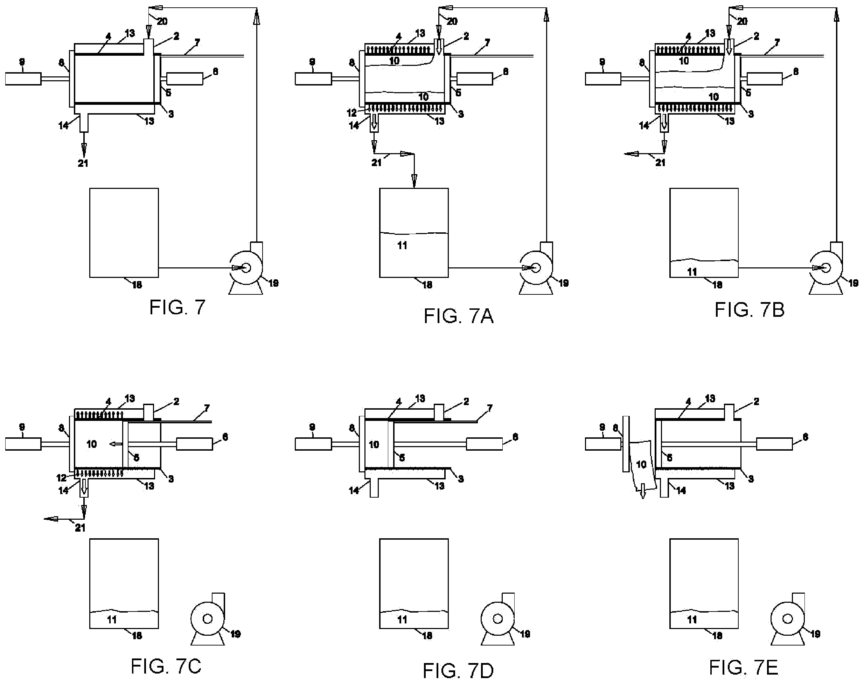

In another preferred embodiment of the present invention, as shown in Figure 7, prior to the step of mechanical compaction, an initial step of dewatering by feeding the sludge (11) to the filtration chamber (3) by pumping the sludge under pressure is added. In such way, while the sludge is being fed under pressure to the filtration chamber, it is already being filtered through the filtration surface (4), concentrating the solids inside the filtration chamber, at the same time that a natural filtrating pre-coat layer of solids is being formed on top of the filtration surfaces, which will serve as sealing and filtration aid for the subsequent step of mechanical compaction. As previously mentioned, for the formation of this natural filtrating pre-coat without the risk of breakage, it is necessary that the filtration pressure starts at a low value, which is gradually increased, a thing that can be easily achieved in the present invention by means of programming a pressure versus time profile for pumping the sludge during the feeding stage. With this procedure, it is possible to process very dilute sludges and sludges containing low granulometry solids without the leakage of solids with the filtrate, as well as it allows for the formation of the pre-coat that is required for the subsequent step of mechanical compaction.

As described above, the present invention is characterized, among other things, by enabling the association of the advantages of two processes, that of filtration by pumping and that of mechanical compaction, in a single equipment and in an extremely simple way, which is a unique and exceptional characteristic of the present invention.

Only for purposes of illustration of the procedure proposed in the present invention for feeding the material (11) by pumping, below is a summarized description of a method of operation according to the alternative of embodiment presented in Figures 7, 7A, 7B, 7C, 7D and 7E, wherein the following method is to be considered only for example purposes, not construing any limitations for other embodiments and procedures for pump feeding:
Figure 7A - the dewatering cycle begins with the pumping of the material to be dewatered (11) from a sump tank (18), through a pump (19), to the equipment object of the present invention. The feed of the material (20) takes place through the feed inlet duct (2), with the material completely filling the filtration chamber (3), while the liquid filters through the filtration surface (4). The closing plate (8) is in its closing position of the filtration chamber (3), while the compression plate (5) is in its totally retreated (backward) position, allowing for the full feeding of the filtration chamber. During this initial step of feeding, while the pre-coat (10) that forms on top of the filtration surface (4) is still very thin, there may be a large loss of fine solids with the filtered liquid, so that it may be convenient to direct this initial filtrate (21) back to the sump tank (18);
Figure 7B - when the pre-coat (10) gets thicker and the filtrate (21) gets cleaner, the filtrate (21) Is no longer returned to the sump tank (18), while the feeding of the material (11) to the equipment of the present invention by the pump (19) continues;
Figure 7C - when the filtration rate reduces considerably, the pump (19) is turned off and the feeding of sludge to the filtration chamber (3) is interrupted. At this time, the step of mechanical compaction begins with the advancement of the compression plate (5);
Figure 7D - the step of mechanical compaction proceeds until there is a significant reduction in the filtration rate, when the compression is then interrupted;
Figure 7E - finally, the closing plate (8) opens the filtration chamber (3), and the dewatered cake (10) is discharged by the compression plate (5). From then on, the cycle is restarted;
The embodiment of the present invention with the feeding of the sludge by pumping, like all other embodiments that have been previously described, allows for the application of all unique and exclusive resources of the present invention that have been herein described, such as the Recovery of the filtration Rate and the Displacement of the Interstitial Liquid by the Injection of Air.

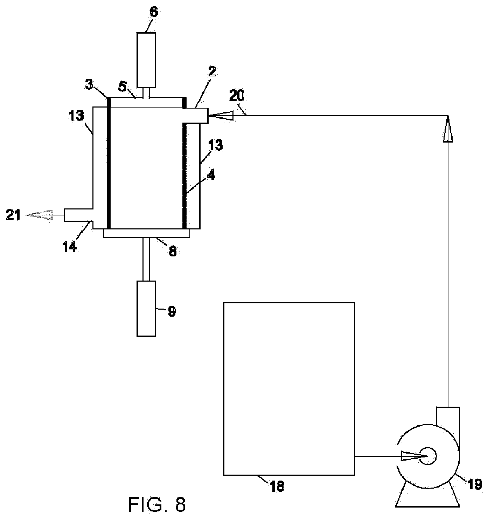

In another preferred embodiment of the present invention, especially applicable to very dilute sludges with solids of small granulometry, as shown in Figure 8, the material can be fed to the filtration chamber (3) through a pump (19), with the filtration chamber installed with its longitudinal axis in the vertical position. In this case, during the feeding period, the solid material tends to deposit on the bottom of the filtration chamber, on top of the closing plate (8), while the liquid is filtered through the filtration surface (4), thus facilitating the initial dewatering step by pumping.

Depending on the material (11) that is being fed to the equipment object of the present invention, different types of filtration surface can be more appropriate to the operation, including, among others, perforated sheets, trapezoidal bar screens, sintered plates, filtration fabrics structured with metallic screens, porous membranes, sintered meshes laminated in multiple layers, etc., wherein, for each type of filtration surface, there also can be used different openings, porosities or materials of construction.

It is important to highlight that the present invention can also have other embodiments and configurations, keeping its principles and essential characteristics. The embodiment configurations herein described must be considered only for illustration purposes, and not as limiting, being the scope of the invention represented by the appended claims and not by the previous descriptions. Each and every change in the embodiments herein presented that has an equivalent signification as the appended claims is comprised within its scope.

## Claims

1. Apparatus for dewatering liquids containing suspended materials in continuous batchwise mode using the principles of filtration and compaction, the apparatus comprising:
(a) a filtration chamber having a feed end and a discharge end, which may be positioned with its main longitudinal axis in the horizontal, vertical or in any intermediate position, having its cross-section a circular, square or any other distinct shape;
(b) a filtration surface located along the surface of the filtration chamber;
(c) a device for storing the material that is to be dewatered, which is coupled to the filtration chamber;
(d) a feed inlet duct connecting the storing device to the feed end of the filtration chamber;
(e) an internal compression plate, centrally mounted inside the filtration chamber, wherein this compression plate has a cross-section that is similar in shape to and is slightly smaller than the internal cross-section of the filtration chamber, and which longitudinal axis is coincident with the longitudinal axis of the filtration chamber, the compression plate being able to move in the direction of its longitudinal axis from the feed end to the discharge end of the filtration chamber, wherein the driving mechanism of this compression plate can be hydraulic, pneumatic or electric;
(f) a closing device for the discharge end of the filtration chamber, comprising a closing plate and a driving mechanism for the closing plate, which mechanism can be hydraulic, pneumatic or electric, wherein the closing plate can move from a closed position that guarantees the water tightness of the filtration chamber to an open position for the discharge of the compacted material, wherein the closing device can be of the linear, knife gate or rotary type;
(g) an opening and closing device for the feed to the filtration chamber, which completely opens or closes the feed inlet duct of the filtration chamber; and
(h) a collector for collecting the filtrate, this collector having an opening for the discharge of the liquid filtered in the filtration chamber;
**characterized by**
(i) means for controlling the intensity and the time of application of the compaction pressure on the material that is being processed;
(j) a programmable system to control the movement and displacement times of the compression plate, of the feed opening and closing device, and of the filtration chamber opening and closing device during each operating cycle.

2. The apparatus according to claim 1, wherein the feeding of the material to the apparatus is made through a pump, by pumping the material into the filtration chamber, wherein the pump flowrate and discharge pressure can be fixed or programmed with respect to time and intensity.

3. The apparatus according to claim 1, wherein the opening and closing device for the feed to the filtration chamber is of the knife gate type, with a shape that corresponds to the inner perimeter of the filtration chamber, and which is attached to and moves together with the forward and backward movements of the compression plate, allowing for the opening and closing of the passage of feeding material through the feed inlet duct.

4. The apparatus according to claim 1, wherein the opening and closing device for the feed to the filtration chamber is comprised by any type of blockage valve, internal or external to the apparatus object of the present invention, so as to allow for the opening and closing of the passage of feeding material through the feed inlet duct.

5. The apparatus according to claim 1, wherein the compression plate and/or the closing plate include a filtration surface with a specific collector for the filtrate, which is attached to the respective compression and/or closing plate.

6. The apparatus according to claim 1, wherein internally to the filtration chamber, there are additional filtration surfaces, coupled and attached to the filtration chamber, and through which the compression plate passes, with a collector for the filtrate.

7. The apparatus according to claims 1, 5 or 6, wherein the filtration surfaces consist in perforated sheets, trapezoidal bar screens and/or woven or sintered meshes, metallic or made of any other type of material, in one single or in multiple superposed layers, which can have a wide range of opening sizes, selected according to each specific application.

8. Method for operating the apparatus for dewatering liquids containing suspended materials in continuous batchwise mode using the principles of filtration and compaction according to claim 1, **characterized by** comprising the following steps:
(a) closing of the filtration chamber by the closing device and maximum backward displacement and stop of the compression plate, beginning the feed of the material to be dewatered and compacted into the filtration chamber, while, simultaneously, takes place the initial dewatering of the material through the filtration surface of the filtration chamber, wherein the filtrated liquid is collected in the filtrate collector;
(b) when the filtration chamber is filled or when the intensity of the filtration reduces significantly, interruption of the feed of the material, advancement (forward displacement) of the compression plate and closing of the passage of the feed inlet duct to the filtration chamber by means of the feed opening and closing device;
(c) when the passage of the feed inlet duct is completely closed, beginning of the step of compression, by means of the advancement (forward displacement) of the compression plate against the material, with the compression pressure controlled in a value that is low enough to form and/or increase, without breaking, the natural filtrating pre-coat layer of material that is next to the filtration surface and over the gaps that possibly exist between the compression plate and the filtration surface, while the liquid filtered in the filtration surfaces is collected in filtrate collectors;
(d) maintenance of the advancement of the compression plate with an increase in the filtration pressure that is being imposed on the material, until it reaches the maximum operating pressure, so that the natural filtrating pre-coat layer becomes more resistant, without breaking;
(e) when the filtration step reaches its end, stop of the advancement of the compression plate, opening of the closing plate of the filtration chamber, and again the advancement of the compression plate until it reaches the discharge end of the filtration chamber, thus discharging the compacted material out of the filtration chamber;
(f) after the discharge of the compacted material, displacement of the closing plate until the complete closing of the discharge end of the filtration chamber, and retreat (backward displacement) of the compression plate until it reaches its initial maximum backward position, while the step of feeding of the filtration chamber is restarted with the opening of the feed inlet duct by the feed opening and closing device, beginning a new cycle of dewatering and compression.

9. The method according to claim 8, wherein the step of filtration by advancement of the compression plate is complemented at any moment, one or more times, with an operation for the recovery of the filtration rate, by means of a procedure of backward displacement followed by a forward displacement of the compression plate, for the quick decompression of the compacted material, followed by the restart of the process of filtration by the advancement of the compression plate;

10. The method according to claim 8, wherein the step of filtration is complemented at any moment, one or more times, with an operation of injection of air to favor the removal of the interstitial liquid that exists in the space between solid particles.
